Europäisches Patentamt

European Patent Office

Office européen des brevets

(19)

(11) Veröffentlichungsnummer : **0 472 808 B1**

(12)

# EUROPÄISCHE PATENTSCHRIFT

(45) Veröffentlichungstag der Patentschrift :
**04.05.94 Patentblatt 94/18**

(51) Int. Cl.$^5$ : **B29C 67/16, B29C 43/24**

(21) Anmeldenummer : **91104198.6**

(22) Anmeldetag : **19.03.91**

(54) Verfahren zur Herstellung einer blasenfreien, kalandrierten Gummibahn.

(30) Priorität : **29.08.90 DE 4027268**

(43) Veröffentlichungstag der Anmeldung :
**04.03.92 Patentblatt 92/10**

(45) Bekanntmachung des Hinweises auf die
Patenterteilung :
**04.05.94 Patentblatt 94/18**

(84) Benannte Vertragsstaaten :
**AT BE CH DE DK ES FR GB GR IT LI LU NL SE**

(56) Entgegenhaltungen :
EP-A- 0 433 563
DE-C- 3 623 795
FR-A- 1 167 760
US-A- 2 535 034
US-A- 3 385 722
US-A- 3 499 956

(73) Patentinhaber : **Firma Carl Freudenberg
Höhnerweg 2-4
D-69465 Weinheim (DE)**

(72) Erfinder : **Heckel, Klaus, Dr.
Am Wetzelsberg 6
W-6946 Gorxheimertal (DE)**
Erfinder : **Arnold, Herbert
Ofenbergstrasse 4
W-6942 Mörlenbach (DE)**
Erfinder : **Graab, Gerhard, Dr.
Nibelungenring 41
W-6800 Mannheim 24 (DE)**

## Beschreibung

Die vorliegende Erfindung betrifft ein Verfahren zur Herstellung einer blasenfreien, kalandrierten Gummibahn.

Zur Herstellung von dekorativen Elastomer-Bahnenwerkstoffen sowie auch von bahnenförmigen Dichtungsmaterialien ist es üblich, im Kalander-Verfahren einen Rohling entsprechender Dicke, z.B. 2 mm, herzustellen und diesen dann einem kontinuierlichen Vulkanisationsprozeß zu unterziehen. Dabei tritt stets das Problem auf, daß kein blasenfreier Rohling entsteht, da im Kalander-Verfahren vorgebildete Blasen in der Rohlingsbahn sich hinterher im Fertigerzeugnis nachteilig bemerkbar machen. Diese Nachteile sind insbesondere ein erhöhter Ausschuß und - bei Anwesenheit nicht erkannter Blasen - Fehlerstellen, die die Funktionsfähigkeit z.B. einer Flachdichtung gefährden.

Die Anzahl und Größe dieser störenden Blasen ist verknüpft mit Art und Mischungszusammensetzung sowie Viskosität der herzustellenden Bahnen; andererseits sind dem Hersteller durch entsprechende Anforderungen Grenzen gesetzt, seien sie technischer Natur, wie z.B. Spezifikationen, seien sie optischer Natur, wie z.B. Anforderungen an das Aussehen des zu fertigenden Produkts, oder auch wirtschaftlicher Natur bei Mischungsveränderungen.

DE-PS 36 23 795 beschreibt die Verwendung einer Fraktion gehärteter Partikel aus elastomerem Material mit Partikelgrößen von 0,1 - 1 mm als Beimischung zu ungehärtetem, elastomerem Material. Damit soll eine definiert unruhige Oberfläche bei den Endprodukten aus Elastomeren erzielt werden. Die hierfür erforderliche Partikelgröße wird durch Mahlen von in flüssigem Stickstoff gekühlten Elastomerteilen in Kugel- oder Prallmühlen erzeugt. Ein solches Verfahren ist aufgrund des hohen Energieverbrauchs sehr unwirtschaftlich. Wird gemäß der o.g. Druckschrift vorgegangen, so kann die Entstehung von Blasen im Vulkanisat nicht unterdrückt werden.

Aus der US-PS 39 69 458 ist es bekannt, im Zuge der Herstellung einer kalandrierten Gummibahn aus der noch unvulkanisierten Kautschukmasse auf mechanische Weise durch Aufstechen der Luftblasen mittels einer sogenannten Stachelwalze die Blasen zu entfernen. Dabei werden längliche, zueinander gestaffelte Schlitze erzeugt.

Aufgabe der Erfindung ist es, ohne entscheidende Eingriffe in die Natur der Mischung, durch entsprechende verfahrenstechnische Maßnahmen einen blasenfreien elastomeren Rohling zur Herstellung der vulkanisierbaren Bahnenware zu erzeugen, wobei insbesondere kein Verlust in der Festigkeit der ausvulkanisierten Elastomermasse in Kauf genommen zu werden braucht.

Gelöst wird diese Aufgabe durch ein Verfahren gemäß den Merkmalen des Patentanspruchs 1. Bevorzugte Ausgestaltungen sind in den Unteransprüchen enthalten.

Bei dem erfindungsgemäßen Verfahren wird die noch unvulkanisierte Kautschukmasse in die Gestalt eines ebenen Bahnenmaterials überführt, wonach man auf die Oberfläche des Bahnenmaterials vulkanisierte Partikel mit einer Korngröße von 40 - 80 % der gewünschten Enddicke der Gummibahn in einer Menge zwischen 5 und 50 g/m² gleichmäßig verteilt aufstreut, bei dem man die Partikel anschließend bis zum Erreichen eines ineinander übergehenden Oberflächenniveaus in das Bahnenmaterial eindrückt und bei dem das so erhaltene Gebilde gleichzeitig hiermit auf Vulkanisationstemperatur erwärmt und durch Vulkanisation verfestigt wird.

Es wurde gefunden, daß man durch diese Vorgehensweise nicht allein ein Optimum an Blasenfreiheit in der Gummibahn erhält. Vielmehr, und das ist eine notwendige Bedingung, kann dabei die Festigkeit der reinen, ausvulkanisierten Gummibahn trotz der darin enthaltenen Partikel beibehalten werden. Bereits bei einer geringfügigen Abweichung von Menge und/oder Durchmesser der Partikel von den Werten der jeweils angegebenen Bereiche resultiert eine deutlich meßbare Verschlechterung der Festigkeit.

Die Partikel werden zweckmäßigerweise mit Hilfe einer Presse in das Bahnenmaterial eingepreßt. Die Schließkräfte der Presse gelangen dabei senkrecht zur Erstreckung des Bahnenmaterials zur Wirksamkeit, was Querverlagerungen der Partikel während des Schließvorganges weitestgehend ausschließt. Die im Streuverfahren aufgebrachten und hierdurch relativ gleichmäßig auf der Oberfläche verteilten Partikel vermögen dadurch nahezu alle Bereiche des Bahnenmaterials zu erreichen und die hierin vorhandenen, willkürlich verteilten Blasen zu zerstechen.

Das erfindungsgemäße Verfahren läßt sich kontinuierlich und damit wirtschaftlicher anwenden, wenn zum Eindrücken der Partikel in das Bahnenmaterial ein Kalander verwendet wird. Dieser sollte einen Rollendurchmesser von wenigstens 1 m haben, um störende Querverlagerungen der Partikel während des Eindrückvorganges zu verhindern.

Unabhängig von der Art der Eindrückung der Partikel sollte die gleichzeitig hiermit erfolgende Wärmezuführung zugleich von zwei einander gegenüberliegenden Seiten erfolgen. Es wurde gefunden, daß sich die Durchführung des Verfahrens hierdurch nicht nur beschleunigen läßt, sondern sich darüber hinaus eine besonders ausgeglichene Blasenfreiheit der fertigen Gummibahn gewährleisten läßt.

Als Partikel gelangen im Rahmen des erfindungsgemäßen Verfahrens bevorzugt solche zur Anwendung, die unregelmäßig geformt sind und die eine dementsprechend unregelmäßig gestaltete Oberflächenstruktur haben. Insbesondere die Verwendung von Partikeln mit wenigstens einer ebenen Oberflächenzone, die durch eine Kante von den umschließenden Bereichen abgehoben ist, hat sich ausgezeichnet bewährt. Derartige Partikel lassen sich erhalten, wenn vulkanisierte Teile, zum Beispiel Produktionsrückstände aus Gummi, in einer Prallmühle zermahlen werden. Eine Kühlung des Mahlgutes ist nicht erforderlich.

Das Bahnenmaterial kann während des Eindrückens der Partikel zumindest im Bereich von einer Oberfläche mit einer reliefartigen Oberflächenstruktur versehen werden. Der Einbettungs- und Entlüftungsprozeß wird hierdurch begünstigt. Solche Prägeverfahren sind Stand der Technik; zweckmäßig verwendet man hierzu Walzen oder Pressenplatten mit entsprechend profilierten Oberflächenstrukturen oder geprägte Papiere, deren Oberflächenstruktur während des Vulkanisationsprozesses auf die Gummibahn übertragen und gleichzeitig dauerhaft fixiert wird.

Die für das Aufstreuen verwendeten Partikel können bei der Herstellung technischer Artikel einfarbig sein und dieselbe Farbe haben wie die zur Herstellung des Bahnenmaterials verwendete Kautschukmasse. Werden demgegenüber kontrastfarbige Partikel verwendet, dann besteht hierdurch eine besonders einfache Möglichkeit, die sich nach dem Aufstreuen ergebende, gleichmäßige Verteilung auf Abweichungen zu kontrollieren.

Das äußere Erscheinungsbild der gebrauchsfertigen Gummibahn wird durch die eingedrückten Partikel in starkem Maße beeinflußt. Es besteht dadurch auch die Möglichkeit, das erfindungsgemäße Verfahren gegebenenfalls zur Herstellung von dekorativen Gummibahnen zu verwenden, indem man andersfarbige, ein- oder mehrfarbige Aufstreupartikel verwendet. Neben der Blasenfreiheit lassen sich hierdurch geschmacklich ansprechende Effekte erzielen.

Eine besonders gute Blasenfreiheit läßt sich erhalten, wenn das zu vulkanisierende Bahnenmaterial eine Mooney-Viskosität von ML 1+4 bei 100° C von etwa 120 aufweist.

Das folgende Beispiel soll die Erfindung weiter verdeutlichen:

Beispiel:

Auf eine unvulkanisierte Gummibahn einer Dicke von etwa 3,5 mm, bestehend aus:

```
Styrol-Butadien-Kautschuk mit 23 % Styrolgehalt      100 Teile
Styrol-Butadien-Copolymer mit 85 % Styrolgehalt       20    "
Gefällter Kieselsäure                                 20    "
Kaolin                                                70    "
Gefällter Kreide                                      30    "
Cumaron-Inden-Harz                                    15    "
Zinkoxid                                               5    "
Stearinsäure                                          1,5   "
Schwefel                                              2,5   "
Polyethylenglykol                                    3,0   "
Cyclohexylbenzthiazylsulfenamid                      2.7   "
```

werden jeweils folgende Mengen von Mahlgut mit folgenden mittleren Teilchendurchmessern aufgestreut, mittels einer Presse eingdrückt und das erhaltene Gebilde gleichzeitig vulkanisiert:

Tabelle 1:

| Menge pro 100 g Mischung: | 1 g | 5 g | 25 g | 50 g | 70 g |
|---|---|---|---|---|---|
| **mittlere Teilchengröße** | | | | | |
| 0,7 mm          Versuch | A | B | C | D | E |
| 2,0 mm | F | G | H | I | J |
| 3,4 mm | K | L | M | N | O |

Parallel dazu erfolgt noch mit der oben beschriebenen Mischung die sogenannte Nullprobe, bei der keine nachträglich aufgestreuten Partikel aus bereits vulkanisiertem Gummi in das Bahnenmaterial eingepreßt sind. Die Ergebnisse sind der nachfolgenden Tabelle 2 zu entnehmen:

Tabelle 2:

---------------------------------------------------------------

Anzahl der Blasen pro m²in der
auf einem Dreiwalzenkalander bei 80°C hergestellten
und bei 170° C in einer Presse
vulkanisierten Platte;
Preßdruck: 30 bar; Plattendicke:
3,7 mm

Mischung

---------------------------------------------------------------

| Mischung | Anzahl |
|---|---|
| A | 15 |
| B | 11 |
| C | 12 |
| D | 11 |
| E | 12 |
| F | 8 |
| G | 1 |
| H | 2 |
| I | 3 |
| J | 6 |
| K | 8 |
| L | 7 |
| M | 10 |
| N | 12 |
| O | 14 |
| Nullprobe | 15 |

Die Zugfestigkeiten der bei 170° C vulkanisierten Mischungen zeigen den Einfluß von Korngröße und Menge der aufgestreuten Partikel und sind nachfolgend an den Mischungen B, G, L, und F, G, H, I aufgelistet.

Tabelle 3:

| Mischung | Zugfestigkeit in MPa |
|---|---|
| B | 9,4 |
| G | 9,2 |
| L | 8,6 |
| F | 9,2 |
| G | 9,2 |
| H | 8,9 |
| I | 8,4 |
| J | 7,3 |
| Nullprobe | 9,5 |

Man kann deutlich erkennen, daß die Erzielung eines blasenfreien Materials besonders günstig mit einem Korn mit der mittleren Korngröße von 2,0 mm sichergestellt werden kann. Wie die ermittelten Zugfestigkeiten an den beispielhaft angegebenen Mischungen zeigen, fällt die Festigkeit bei einer Menge über 50 Gew.-% deutlich ab.

**Patentansprüche**

1. Verfahren zur Herstellung einer blasenfreien, kalandrierten Gummibahn, bei dem man die noch unvulkanisierte Kautschukmasse in die Gestalt eines ebenen Bahnenmaterials überführt, bei dem man auf die Oberfläche des Bahnenmaterials vulkanisierte Partikel mit einer Korngröße von 40 - 80 % der gewünschten Enddicke der Gummibahn in einer Menge zwischen 5 und 50 g/m² gleichmäßig verteilt aufstreut, bei dem die Partikel anschließend bis zum Erreichen eines ineinander übergehenden Oberflächenniveaus in das Bahnenmaterial eingedrückt werden und bei dem das so erhaltene Gebilde gleichzeitig hiermit auf Vulkanisationstemperatur erwärmt und durch Vulkanisation verfestigt wird.

2. Verfahren nach Anspruch 1, dadurch gekennzeichnet, daß die Partikel mit Hilfe einer Presse in das Bahnenmaterial eingedrückt werden.

3. Verfahren nach Anspruch 1, dadurch gekennzeichnet, daß die Partikel mit Hilfe eines Kalanders in das Bahnenmaterial eingedrückt werden.

4. Verfahren nach Anspruch 1 bis 3, dadurch gekennzeichnet, daß das Bahnenmaterial beim Eindrücken der Partikel zumindest im Bereich von einer Oberfläche mit einer reliefartigen Oberflächenstrukturierung versehen wird.

5. Verwendung von unregelmäßig geformten Partikeln bei dem Verfahren nach Anspruch 1 bis 4.

## Claims

1. A process for producing a blister-free calendered rubber web, in which the still-unvulcanized rubber composition is converted into the form of a flat web material, in which vulcanized particles with a grain size of 40-80 % of the desired final thickness of the rubber web are scattered, uniformly distributed, in an amount between 5 and 50 g/m$^2$ on to the surface of the web material, in which the particles are subsequently pressed into the web material until an intermerging surface level is achieved and in which the structure thus obtained, simultaneously therewith, is heated to vulcanization temperature and is hardened by vulcanization.

2. A process according to claim 1, characterized in that the particles are pressed into the web material with the aid of a press.

3. A process according to claim 1, characterized in that the particles are pressed into the web material with the aid of a calender.

4. A process according to any of claims 1 to 3, characterized in that, during pressing in of the particles, the web material is provided with a relief-like surface structuring, at least in the region of one surface.

5. Use of irregularly shaped particles in the process according to any of claims 1 to 4.

## Revendications

1. Procédé de réalisation d'une bande de caoutchouc calandrée et exempte de bulles, selon lequel on met la masse de caoutchouc encore non vulcanisée à la forme d'une bande de matière plane, on répand ensuite sur la surface de la bande de matière des particules vulcanisées ayant une granulométrie comprise entre 40 et 80% de l'épaisseur finale désirée de la bande de caoutchouc, en quantité comprise entre 5 et 50 g/m$^2$ et avec répartition uniforme, selon lequel ensuite les particules sont enfoncées jusqu'à ce qu'on atteigne dans la matière de la bande des niveaux superficiels se correspondant mutuellement et selon lequel la structure ainsi obtenue est simultanément chauffée jusqu'à la température de vulcanisation et est solidifiée par vulcanisation.

2. Procédé selon la revendication 1, caractérisé en ce que les particules sont enfoncées dans la matière de la bande avec une presse.

3. Procédé selon la revendication 1, caractérisé en ce que les particules sont enfoncées dans la matière de la bande à l'aide d'une calandreuse.

4. Procédé selon l'une des revendications 1 à 3, caractérisé en ce que, lors de l'enfoncement des particules, la matière de la bande est pourvue, au moins dans une zone d'une surface, d'une texture superficielle analogue à un relief.

5. Utilisation de particules de formes irrégulières dans le procédé selon les revendications 1 à 4.